# FASCICULE DE BREVET EUROPEEN

(11) **EP 3 453 198 B1**
(45) Date de publication et mention de la délivrance du brevet: **01.07.2020**
(21) Numéro de dépôt: 17726133.6
(22) Date de dépôt: 02.05.2017
(51) Int. Cl.: H04W 8/12

(54) **SYSTÈME D'ORIENTATION DU TRAFIC D'UN UTILISATEUR EN SITUATION D'ITINÉRANCE, PROCÉDÉS, ENTITÉ ET PLATEFORME MIS EN OEUVRE DANS CE SYSTÈME**
SYSTEM ZUR STEUERUNG DES VERKEHRS EINES ROAMING-BENUTZERS, VERFAHREN, EINHEIT UND PLATTFORM ZUR VERWENDUNG IN DIESEM SYSTEM
SYSTEM FOR STEERING THE TRAFFIC OF A ROAMING USER, METHODS, UNIT, AND PLATFORM USED IN THIS SYSTEM

(30) Priorité: 04.05.2016 FR 1654065
(43) Date de publication de la demande: 13.03.2019
(73) Titulaire: ORANGE, 75015 Paris (FR)
(72) Inventeur: LE GUENNEC, Philippe, 75015 Paris (FR)
(74) Mandataire: Cabinet Beau de Loménie
(86) Numéro de dépôt international: PCT/FR2017/051041
(87) Numéro de publication internationale: WO 2017/191403

(56) Documents cités:
- WO-A1-2015/101808
- US-A1- 2008 020 756
- US-A1- 2013 102 356
- Pradeep Bhardwaj: "LTE Technology Primer V01 - Documents", , 8 novembre 2014 (2014-11-08), XP055317765, Extrait de l'Internet: URL:http://documents.mx/documents/lte-tech nology-primer-v01.html [extrait le 2016-11-09]

## Description

### Arrière-plan de l'invention

La présente invention se situe dans le contexte de l'orientation du trafic d'un usager en itinérance dans un réseau de télécommunications, mécanisme connu sous l'appellation « steering of roaming »et normalisée par le 3GPP.

L'homme du métier peut notamment se reporter aux documents suivants : 3GPP TS 29.155, 3GPP TS 29.272, 3GPP TS 23.401, 3GPP TS 23.122, 3GPP TS 22.011, IETF RFC 3588, ETSI GSM 11.10.

On rappelle que lorsqu'un utilisateur utilise un réseau mobile d'origine (H-PLMN pour « Home Public Land Mobile Network ») déployé dans un pays par un premier opérateur auprès duquel cet utilisateur a souscrit, l'itinérance (en anglais « Roaming ») permet à cet utilisateur de se déplacer en dehors de ce réseau d'origine et d'utiliser les ressources d'un autre réseau, dit réseau visité (V-PLMN pour « Visited PLMN »).

L'orientation du trafic en itinérance (Steering of Roaming) est le mécanisme permettant au premier opérateur de privilégier le réseau visité par un utilisateur en itinérance dans une zone géographique, parmi les différents réseaux disponibles dans cette zone.

L'orientation du trafic en itinérance (Steering of Roaming) permet ainsi à l'opérateur du réseau d'origine d'influencer la répartition du trafic dans une zone géographique donnée, pour ses abonnés parmi les différents opérateurs présents dans cette zone.

Le document US 2004/0192306 et le document "Technology Primer on Understanding the différent aspects of LTE and Its Impact in various areas" from Syniverse Technologies, décrivent un mécanisme permettant à l'opérateur d'un réseau d'origine d'influencer la sélection d'un réseau visité par un terminal mobile en situation d'itinérance.

Ce mécanisme n'offre malheureusement pas assez de souplesse à l'opérateur du réseau d'origine.

### Objet et résumé de l'invention

L'invention est définie par les revendications.

Selon un premier aspect, l'invention concerne une entité d'un réseau cellulaire de téléphonie mobile nominal comportant un module d'enregistrement de la localisation géographique d'utilisateurs dudit réseau, cette entité étant configurée pour :
- recevoir, en provenance d'un équipement d'un réseau visité par un utilisateur en situation d'itinérance, une requête de mise à jour de la localisation de l'utilisateur, cette requête comportant au moins un identifiant du terminal de l'utilisateur, un identifiant du réseau visité et un identifiant d'un service demandé par l'utilisateur ;
- envoyer à cet équipement une réponse à cette requête, cette réponse étant susceptible d'être interceptée par une plateforme d'orientation de trafic placée en coupure de flux entre l'entité et l'équipement.

Cette entité est remarquable en ce qu'elle est configurée pour insérer, dans la réponse, des paramètres minimum de qualité de service requis du réseau visité, ces paramètres étant déterminés en fonction du service demandé et d'un profil de l'utilisateur dans ledit réseau nominal.

Selon un deuxième aspect, l'invention concerne une plateforme d'orientation de trafic destinée à être placée en coupure de flux entre une entité d'un réseau cellulaire de téléphonie mobile nominal comportant un module d'enregistrement de la localisation géographique d'utilisateurs du réseau et un équipement d'un réseau visité par un utilisateur en situation d'itinérance. Cette plateforme comporte :
- un module d'obtention de paramètres actualisés de qualité de service dudit réseau visité ;
- un module d'interception, d'une réponse émise par l'entité et destinée à un équipement du réseau visité en réponse à une requête de mise à jour de la localisation d'un utilisateur, cette réponse comportant, des paramètres minimum de qualité de service requis dudit réseau visité ;
- un module de détermination apte à déterminer si les paramètres actualisés de qualité de service dudit réseau visité sont au moins équivalents auxdits paramètres minimum de qualité de service requis du réseau visité ; et
- un module d'envoi, à l'équipement du réseau visité, d'une réponse positive à la requête de mise à jour de localisation uniquement en cas de succès de l'étape de détermination.

Ainsi, et d'une façon générale, l'invention propose un mécanisme d'orientation de trafic d'un utilisateur en situation d'itinérance (en anglais « steering of roaming ») dans lequel on favorise un opérateur dès lors que le réseau de cet opérateur offre à cet utilisateur une qualité de service suffisante pour un service donnée, le critère « suffisant » étant déterminé en fonction du profil de cet utilisateur dans le réseau nominal.

L'invention peut ainsi être vue comme une évolution du mécanisme de steering of roaming normalisée par le 3GPP, cette évolution étant parfaitement compatible avec la version 23.122 de ce mécanisme (Non-Access-Stratum (NAS) functions related to Mobile Station (MS) in idle mode).

Cette évolution permet à l'opérateur du réseau nominal de gérer la répartition du trafic des utilisateurs itinérants dans une zone géographique donnée, par exemple un pays, parmi les différents opérateurs couvrant cette zone avec une forte flexibilité, en prenant en compte notamment le service demandé et la capacité du réseau visité à offrir une qualité de service suffisante pour ce service et pour cet abonné.

On peut noter que ni les terminaux, ni les équipements du réseau visité ne sont impactés par l'invention.

L'invention trouve une application particulière dans les réseaux LTE (Long Term Evolution ou 4G).

Ainsi, dans un mode particulier de réalisation, l'entité et l'équipement mentionnés précédemment sont respectivement une entité HSS (Home Subscriber Server) du réseau nominal et une entité MME (Mobility Management Entity) du réseau visité, le HSS et le MME communiquant entre eux conformément au protocole Diameter.

Dans ce mode particulier de réalisation, les paramètres minimum de qualité de service requis dudit réseau visité peuvent correspondre au QCI attribué à l'utilisateur du terminal sur le réseau nominal pour le service demandé.

Ainsi le réseau visité privilégié est sélectionné par l'opérateur du réseau nominal en fonction de paramètres de qualité de service tels que la priorisation des paquets (« priority »), le délai de paquet (« packet delay budget ») et le taux d'erreur (« Packet error loss »).

L'invention peut aussi s'appliquer dans un réseau 3G.

Ainsi, dans un mode particulier de réalisation, l'entité et l'équipement mentionnés précédemment sont respectivement une entité HLR (Home Location Register) du réseau nominal et une entité SGSN (Service GPRS Support Node) du réseau visité pour une demande d'accès à un service de données, ou une entité MSC (Mobile Switching Center) pour une demande d'accès à un service de type voix.

Dans ce mode de réalisation, le HLR communique avec le MSC ou avec le SGSN conformément au protocole MAP.

Dans un mode particulier de réalisation, le module d'envoi de la plateforme d'orientation de trafic est configuré pour envoyer à l'équipement MME/SGSN/MSC du réseau visité, une réponse négative à la requête de mise à jour de localisation en cas d'échec de l'étape de détermination.

Dans un mode particulier de réalisation de l'invention :
- la requête de mise à jour de la localisation de l'utilisateur envoyée par l'équipement MME/SGSN/MSC du réseau visité à l'entité HLR/HSS du réseau nominal est une requête Update Location ;
- les réponses positive/négative envoyées par la plateforme d'orientation de trafic à l'équipement MME/SGSN/MSC du réseau visité sont respectivement les réponses Update Location Answer et Update Location Cancel.

Dans un mode particulier de réalisation, la réponse négative Update Location Cancel comporte un champ AVP avec un type d'erreur particulier représentatif d'un problème de qualité de service.

Corrélativement, l'invention concerne aussi un procédé mis en œuvre par une entité d'un réseau cellulaire de téléphonie mobile nominal comportant un module d'enregistrement de la localisation géographique d'utilisateurs dudit réseau, ce procédé comportant :
- une étape de réception, en provenance d'un équipement d'un réseau visité par un dit utilisateur en situation d'itinérance, d'une requête de mise à jour de la localisation de l'utilisateur, cette requête comportant au moins un identifiant du terminal de l'utilisateur, un identifiant dudit réseau visité et un identifiant d'un service demandé par l'utilisateur ;
- une étape d'envoi, audit équipement d'une réponse à la requête, cette réponse étant susceptible d'être interceptée par une plateforme d'orientation de trafic placée en coupure de flux entre ladite entité et l'équipement.

Ce procédé est remarquable en ce qu'l comporte une étape d'insertion, dans la réponse, avant l'étape d'envoi, de paramètres minimum de qualité de service requis du réseau visité déterminés en fonction dudit service demandé et d'un profil de l'utilisateur dans ledit réseau nominal.

L'invention vise également un procédé mis en œuvre par une plateforme d'orientation de trafic placée en coupure de flux entre une entité d'un réseau cellulaire de téléphonie mobile nominal comportant un module d'enregistrement de la localisation géographique d'utilisateurs du réseau et un équipement d'un réseau visité par un utilisateur en situation d'itinérance, ce procédé comportant :
- une étape d'obtention de paramètres actualisés de qualité de service dudit réseau visité ;
- une étape d'interception, d'une réponse émise par cette entité et destinée à un équipement du réseau visité en réponse à une requête de mise à jour de la localisation d'un utilisateur, cette réponse comportant des paramètres minimum de qualité de service requis du réseau visité ;
- une étape pour déterminer si les paramètres actualisés de qualité de service dudit réseau visité sont au moins équivalents aux paramètres minimum de qualité de service requis du réseau visité ; et
- une étape d'envoi, à l'équipement du réseau visité, d'une réponse positive à la requête de mise à jour de localisation uniquement en cas de succès de ladite détermination.

L'invention vise aussi un système d'orientation du trafic d'un utilisateur en situation d'itinérance comportant une entité et une plateforme telles que mentionnées ci-dessus.

Dans un mode particulier de réalisation, les différentes étapes du procédé mis en oeuvre par l'entité conforme à l'invention et/ou les différentes étapes du procédé mis en œuvre par la plateforme d'orientation de trafic selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une entité et une plateforme d'orientation de trafic conformes à un mode particulier de mise en œuvre de l'invention dans leur environnement;
- la figure 2 représente les principales étapes de procédés mis en œuvre par l'entité et la plateforme de la figure 1 dans un mode particulier de réalisation de l'invention ;
- la figure 3 représente une entité conforme à un mode particulier de réalisation de l'invention ; et
- la figure 4 représente une plateforme d'orientation de trafic conforme à un mode particulier de réalisation de l'invention.

### Description détaillée d'un premier mode de réalisation de l'invention

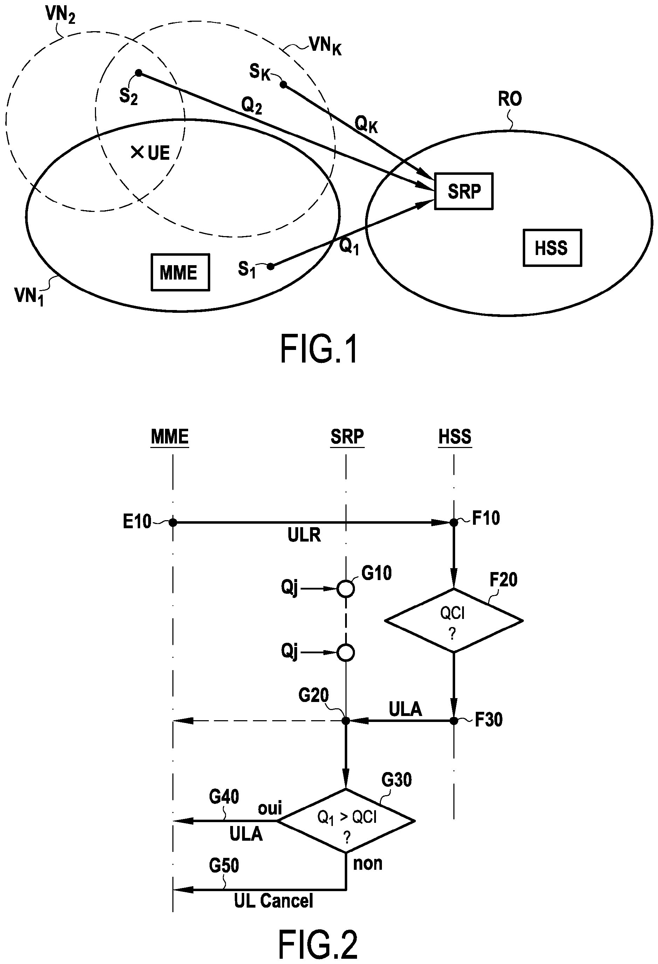

La **figure 1** représente un terminal utilisateur UE d'un utilisateur abonné à un premier réseau de télécommunication déployé dans son pays (réseau d'origine ou réseau nominal RO), cet utilisateur étant en déplacement dans un pays étranger non couvert par ce premier réseau RO. Ce réseau d'origine comporte une entité HSS (Home Subscriber Server) conforme à l'invention et une plateforme d'orientation du trafic SRP conforme à l'invention.

On considère que cet utilisateur allume son terminal UE dans ce pays étranger et que ce terminal s'attache à un premier réseau LTE (Long Term Evolution ou 4G) visité VN1. Il est autrement dit en situation d'itinérance (Roaming).

Ce premier réseau est typiquement sélectionné sur la base d'une information mémorisée dans la carte SIM du terminal UE.

D'autres réseaux 4G, VN2, ..., VNk couvrent la zone géographique dans laquelle se situe le terminal UE.

Chacun de ces réseaux VNi comporte une entité MME (Mobility Management Entity) et une sonde Si apte à obtenir des paramètres de qualité de service actualisés sur ce réseau.

En pratique, dans la plupart des pays, les zones couvertes par un réseau LTE le sont aussi par un réseau 3G de sorte que le terminal UE s'attache à la fois à un réseau 3G et à la fois à un réseau 4G.

On ne s'intéresse dans ce premier mode de réalisation qu'à la procédure mise en œuvre suite à l'attachement du terminal UE au réseau 4G.

En référence à la figure 2, et de façon connue, suite à l'attachement du terminal UE au réseau visité 4G VN1, l'entité MME (Mobility Management Entity) de ce réseau envoie, au cours d'une étape E10, conformément au protocole DIAMETER, une requête ULR (Update Location Request) à l'entité HSS du réseau d'origine RO de l'abonné afin de mettre à jour l'information de localisation de l'abonné dans le HSS.

Cette requête ULR comporte l'identifiant du réseau visité VN1, l'adresse de l'entité MME, l'identité IMSI du terminal UE, et des paramètres du service sollicité par l'utilisateur.

L'entité HSS reçoit cette requête ULR au cours d'une étape F10.

Au cours d'une étape F20, l'entité HSS détermine le QCI (QoS Class Identifier) attribué à l'utilisateur du terminal UE sur le réseau d'origine RO pour le service demandé. Ce QCI est déterminé typiquement en fonction de l'abonnement et/ou du profil de l'utilisateur.

Au cours d'une étape F30, l'entité HSS envoie, conformément au protocole DIAMETER une réponse Update Location Answer (ULA), à destination de l'entité MME.

Conformément à l'invention, cette réponse ULA comporte le QCI déterminé à l'étape F20.

La plateforme d'orientation du trafic SRP est placée en coupure de flux entre l'entité HSS du réseau d'origine et l'entité MME du réseau visité, de sorte que la plateforme SRP reçoit la réponse ULA comportant le QCI au cours d'une étape G20.

Conformément à l'invention, la plateforme SRP obtient régulièrement (au cours d'une étape générale G10) des paramètres instantanés Qj représentatifs de la qualité de service actualisée sur les différents réseaux VNj disponibles dans la zone géographique visitée par l'utilisateur du terminal UE, et en particulier les paramètres instantanés Q1 représentatifs de la qualité de service actualisée sur le réseau visité VN1 auquel le terminal UE est attaché.

Au cours d'une étape G30, et conformément à l'invention, la plateforme SRP détermine, sur la base des paramètres actualisés Q1, si le réseau visité VN1 est en mesure d'offrir une qualité de service équivalente ou supérieure à celle requise par la classe de service QCi reçue à l'étape G20.

Si c'est le cas, la plateforme d'orientation de trafic SRP envoie, au cours d'une étape G40, et conformément au protocole DIAMETER, la réponse Update Location Answer (ULA) à destination de l'entité MME. Dans ces conditions le terminal UE reste attaché au réseau visité VN1, celui-ci étant apte à permettre à l'utilisateur d'accéder au service demandé avec une qualité de service équivalente ou supérieure au QCI qui lui a été attribué dans son réseau d'origine pour un service équivalent.

Au contraire, si la plateforme SRP détermine, à l'étape G30, sur la base des paramètres actualisés Q1, que le réseau visité VN1 n'est pas en mesure d'offrir une qualité de service au moins équivalente à celle requise par la classe de service QCi, la plateforme d'orientation de trafic SRP envoie à l'entité MME du réseau visité, au cours d'une étape G50, une réponse Update Location Cancel.

Dans le mode de réalisation décrit ici, la réponse Update Location Cancel comporte un champ AVP avec un type d'erreur particulier représentatif d'un problème de QoS.

Conformément à la norme 3GPP TS 23.122, 3GPP TS 29.272 et ETSI GSM 11.10, le terminal UE effectue des séquences de procédure d'authentification avant de changer d'affiliation.

Si les quatre tentatives échouent, le terminal UE s'attache à un autre réseau visité VNj disponible dans la zone géographique et les étapes décrites précédemment sont réexécutées de façon identique, la plateforme d'orientation de service renvoyant à la requête Update Location émise par l'entité MME une réponse positive Update Location Answer si et seulement si ce réseau visité VNj offre à l'utilisateur, à cet instant, une qualité de service au moins équivalente au QCi enregistré auprès du HSS pour cet utilisateur et pour le service demandé.

L'invention a été décrite dans un scénario dans lequel l'utilisateur du terminal UE venait d'allumer son terminal. Elle est bien entendue mise en œuvre à chaque envoi d'une requête Update Location par l'entité MME, et notamment lorsque le terminal UE s'attache à un réseau 4G après avoir perdu sa connexion avec ce même réseau 4G ou avec un autre réseau 4G.

### Description détaillée d'un deuxième mode de réalisation de l'invention.

Le premier mode de réalisation décrit précédemment correspond à une mise en œuvre de l'invention dans un réseau LTE.

L'invention peut également être mise en œuvre dans un réseau 3G.

Ce deuxième mode de réalisation diffère de celui décrit précédemment en ce que les requêtes Update Location sont envoyées à l'entité HLR du réseau nominal, conformément au protocole MAP (Mobile Application Part) par une entité SGSN (Service GPRS Support Node) du réseau visité 3G pour une demande d'accès à un service de données, ou par une entité MSC (Mobile Switching Center) pour une demande d'accès à un service de type voix.

Dans ce mode de réalisation, le HLR détermine les paramètres minimum que doit supporter le réseau visité pour le service demandé, en fonction du profil ou de l'abonnement de l'utilisateur pour le réseau 3G nominal. Ces paramètres sont insérés par le HLR dans la réponse à la requête d'Update Location destinée à l'entité SGSN/MSC et interceptés par la plateforme SRP en coupure de flux.

Dans ce mode de réalisation, la plateforme SRP obtient régulièrement les paramètres actualisés de qualité de service des différents réseaux 3G disponibles dans la zone géographique dans laquelle se trouve le terminal UE.

La plateforme SRP vérifie si les paramètres actualisés de QoS offerts par le réseau 3G auquel le terminal UE est attaché sont au moins équivalents aux paramètres minimum déterminés par le HLR pour le service demandé en fonction du profil de l'utilisateur.

Si tel est le cas, et uniquement dans ces conditions, la plateforme SRP renvoie une réponse Update Location Answer à l'entité SGSN/MSC du réseau visité.

### Description détaillée d'un troisième mode de réalisation de l'invention

Le troisième mode de réalisation de l'invention est celui dans lequel l'entité HSS/HLR du réseau nominal et la plateforme SRP d'orientation de trafic mettent en œuvre l'invention pour les réseaux 3G et 4G.

Dans ce mode de réalisation :
- sur réception d'une requête Update Location en provenance d'une entité MME d'un réseau 4G visité, l'entité HSS/HLR et la plateforme SRP se comportent comme dans le premier mode de réalisation de l'invention ; et
- sur réception d'une requête Update Location en provenance d'une entité SGSN/MSC d'un réseau 3G visité, l'entité HSS/HLR et la plateforme SRP se comportent comme dans le deuxième mode de réalisation de l'invention.
Dans ce troisième mode de réalisation de l'invention, la plateforme SRP connaît les paramètres actualisés de qualité de service sur les réseaux 3G et 4G de la zone géographique du terminal UE pour pouvoir répondre aux deux types de demande.

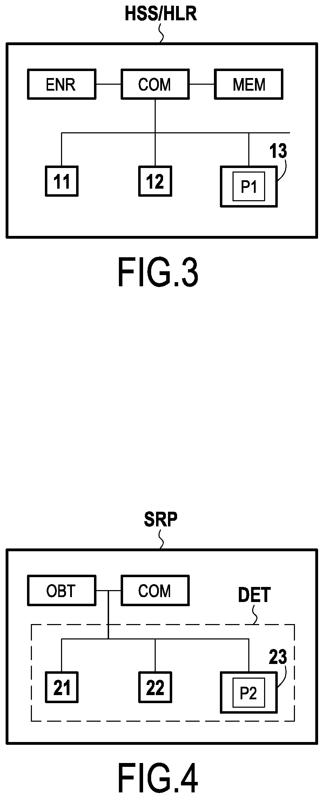

La figure 3 représente une entité HSS/HLR conforme à un mode de réalisation à l'invention. Cette entité comporte un module ENR configuré pour enregistrer la localisation géographique d'utilisateurs ayant souscrit un abonnement auprès d'un opérateur opérant un réseau nominal dans lequel est installée ladite entité.

Cette entité comporte un module COM de communication apte à communiquer avec un équipement MME d'un réseau tiers conformément au protocole DIAMETER et/ou avec un équipement SGSN/MSC d'un réseau tiers conformément au protocole MAP.

Ce module de communication est en particulier apte à :
- recevoir d'un tel équipement MME/SGSN/MSC une requête UL de mise à jour de la localisation de l'utilisateur, cette requête comportant au moins un identifiant du terminal de l'utilisateur, un identifiant dudit réseau visité et un identifiant d'un service demandé par l'utilisateur ; et à
- envoyer à cet équipement une réponse à cette requête.

Cette entité HSS/HLR comporte une mémoire MEM non volatile dans laquelle sont mémorisés, pour chacun des abonnés, et pour un ou plusieurs services, des paramètres minimum de qualité de service requis du réseau visité déterminés. Dans le cas où le réseau visité est un réseau LTE, ces paramètres peuvent être les QCI connus de l'homme du métier.

Dans le mode de réalisation décrit ici, l'entité HSS/HLR comporte un processeur 11, une mémoire vive de type RAM 12 et une mémoire morte de type ROM 13. La mémoire morte de type ROM 13 constitue un support au sens de l'invention, dans lequel est mémorisé un programme d'ordinateur P1 conforme à l'invention, ce programme comportant des instructions pour la mise en œuvre des étapes F10 à F30 décrites précédemment en référence à la figure 2.

Ce programme est remarquable notamment en ce qu'il comporte des instructions pour insérer, dans la réponse à envoyer à destination de l'équipement MME/SGSN/MSC, des paramètres minimum de qualité de service requis dudit réseau visité déterminés en fonction dudit service demandé et d'un profil de l'utilisateur dans le réseau nominal.

La figure 4 représente une plateforme d'orientation de trafic SRP conforme à un mode de réalisation de l'invention. Cette plateforme SRP est destinée à être placée en coupure de flux entre une entité HSS/ HLR d'un réseau cellulaire de téléphonie mobile nominal comportant un module d'enregistrement de la localisation géographique d'utilisateurs dudit réseau et un équipement MME/SGSN/MSC d'un réseau visité VNk par un utilisateur en situation d'itinérance.

La plateforme SRP comporte un module OBT d'obtention de paramètres actualisés de qualité de service du réseau visité. Ce module d'obtention peut par exemple être constitué par un module apte à communiquer avec une sonde Sk apte à effectuer des mesures sur le réseau VNk pour obtenir ces paramètres.

La plateforme SRP comporte un module COM de communication apte à intercepter une réponse émise par l'entité HSS/HLR et destinée à l'équipement MME/SGSN/MSC du réseau visité et à transmettre une telle réponse, éventuellement après modification à cet équipement.

On rappelle que la réponse émise par l'entité HSS/HLR comporte des paramètres minimum de qualité de service requis du réseau visité déterminés par cette entité en fonction du service demandé par l'utilisateur et d'un profil de l'utilisateur dans le réseau nominal RO.

Dans le mode de réalisation décrit ici, la plateforme SRP comporte un processeur 21, une mémoire vive de type RAM 22 et une mémoire morte de type ROM 23. La mémoire morte de type ROM 23 constitue un support au sens de l'invention, dans lequel est mémorisé un programme d'ordinateur P2 conforme à l'invention, ce programme comportant des instructions pour la mise en œuvre des étapes G10 à G30 décrites précédemment en référence à la figure 2.

Ce programme est remarquable notamment en ce qu'il comporte des instructions pour déterminer si les paramètres actualisés de qualité de service dudit réseau visité obtenus par le module OBT sont au moins équivalents aux paramètres minimum de qualité de service compris dans la réponse interceptée.

Le processeur 21, une mémoire vive de type RAM 22 et une mémoire morte de type ROM 23 constituent, dans cet exemple de réalisation, un module de détermination DET apte à déterminer si lesdits paramètres actualisés de qualité de service dudit réseau visité sont au moins équivalents auxdits paramètres minimum de qualité de service requis dudit réseau visité.

## Revendications

1. Plateforme d'orientation de trafic (SRP) destinée à être placée en coupure de flux entre une entité (HSS, HLR) d'un réseau cellulaire de téléphonie mobile nominal comportant un module d'enregistrement de la localisation géographique d'utilisateurs dudit réseau et un équipement (MME, SGSN, MSC) d'un réseau visité par un dit utilisateur en situation d'itinérance, ladite plateforme comportant :
- un module d'obtention de paramètres actualisés de qualité de service dudit réseau visité ;
- un module d'interception, d'une réponse (ULA) émise par ladite entité (HSS, HLR) et destinée à un équipement (MME, SGSN, MSC) dudit réseau visité en réponse à une requête de mise à jour de la localisation d'un utilisateur, ladite réponse comportant, des paramètres minimum de qualité de service requis dudit réseau visité ;
- un module de détermination apte à déterminer si lesdits paramètres actualisés de qualité de service dudit réseau visité sont au moins équivalents auxdits paramètres minimum de qualité de service requis dudit réseau visité ; et
- - un module d'envoi, audit équipement (MME, SGSN, MSC) dudit réseau visité, d'une réponse positive à ladite requête de mise à jour de localisation uniquement en cas de succès de ladite de détermination.

2. Plateforme d'orientation de trafic (SRP) selon la revendication 1, **caractérisée en ce que** ledit module d'envoi est configuré pour envoyer audit équipement (MME, SGSN, MSC) dudit réseau visité, une réponse négative à ladite requête de mise à jour de localisation en cas d'échec de ladite de détermination.

3. Plateforme d'orientation de trafic (SRP) selon la revendication 2, **caractérisée en ce que** ladite réponse négative comporte un champ (AVP) avec un type d'erreur particulier représentatif d'un problème de qualité de service.

4. Procédé mis en œuvre par une plateforme d'orientation de trafic (SRP) placée en coupure de flux entre une entité (HSS, HLR) d'un réseau cellulaire de téléphonie mobile nominal comportant un module d'enregistrement de la localisation géographique d'utilisateurs dudit réseau et un équipement (MME, SGSN, MSC) d'un réseau visité par un dit utilisateur en situation d'itinérance, ledit procédé comportant :
- une étape (G10) d'obtention de paramètres actualisés de qualité de service dudit réseau visité ;
- une étape (G20) d'interception, d'une réponse (ULA) émise par ladite entité (HSS, HLR) et destinée à un équipement (MME, SGSN, MSC) dudit réseau visité en réponse à une requête de mise à jour de la localisation d'un utilisateur, ladite réponse comportant des paramètres minimum de qualité de service requis dudit réseau visité ;
- une étape (G30) pour déterminer si lesdits paramètres actualisés de qualité de service dudit réseau visité sont au moins équivalents auxdits paramètres minimum de qualité de service requis dudit réseau visité ; et
- - une étape (G40) d'envoi, audit équipement (MME, SGSN, MSC) dudit réseau visité, d'une réponse positive à ladite requête de mise à jour de localisation uniquement en cas de succès de ladite de détermination.

5. Système d'orientation du trafic d'un utilisateur en situation d'itinérance comportant :
- une entité (HSS, HLR) d'un réseau cellulaire de téléphonie mobile nominal comportant un module d'enregistrement de la localisation géographique d'utilisateurs dudit réseau, ladite entité étant configurée pour :
- recevoir, en provenance d'un équipement (MME, SGSN, MSC) d'un réseau visité par un dit utilisateur en situation d'itinérance, une requête (UL) de mise à jour de la localisation de l'utilisateur, ladite requête comportant au moins un identifiant du terminal de l'utilisateur, un identifiant dudit réseau visité et un identifiant d'un service demandé par l'utilisateur ;
- envoyer audit équipement (MME, SGSN, MSC) une réponse à ladite requête, ladite réponse étant susceptible d'être interceptée par une plateforme d'orientation de trafic (SRP) placée en coupure de flux entre ladite entité (HSS, HLR) et ledit équipement (MME, SGSN, MSC), ladite entité étant **caractérisée en ce qu'**elle est configurée pour insérer, dans ladite réponse, des paramètres minimum de qualité de service requis dudit réseau visité déterminés en fonction dudit service demandé et d'un profil de l'utilisateur dans ledit réseau nominal, et
- une plateforme d'orientation de trafic selon l'une quelconque des revendications 1 à 3.

6. Système selon la revendication 5 dans lequel ladite entité est apte à recevoir ladite requête en provenance d'un équipement (MME) d'un réseau visité de type LTE conformément au protocole Diameter, lesdits paramètres minimum de qualité de service requis dudit réseau visité correspondant au QCI attribué audit utilisateur du terminal UE sur ledit réseau nominal pour ledit service demandé.

7. Système selon la revendication 5 dans lequel ladite entité est apte à recevoir ladite requête en provenance d'un équipement (SGSN, MSC) d'un réseau visité de type 3G conformément au protocole MAP.

8. Programme d'ordinateur (P1, P2) comportant des instructions pour l'exécution des étapes d'un procédé selon la revendication 4 lorsque ledit programme est exécuté par un ordinateur.

9. Support d'enregistrement (13, 23) lisible par un ordinateur sur lequel est enregistré un programme d'ordinateur (P1, P2) comprenant des instructions pour l'exécution des étapes d'un procédé selon la revendication 4.

## Patentansprüche

1. Verkehrssteuerungsplattform (SRP), die dazu bestimmt ist, in Flussunterbrechung zwischen einer Entität (HSS, HLR) eines zellularen Mobilfunk-Heimatnetzes, die ein Speichermodul des geographischen Standorts von Benutzern des Netzes aufweist, und einer Ausrüstung (MME, SGSN, MSC) eines von einem Benutzer in einer Roaming-Situation besuchten Netzes platziert zu werden, wobei die Plattform aufweist:
- ein Modul zum Erhalt von aktualisierten Dienstqualitätsparametern des besuchten Netzes;
- ein Modul zum Abfangen einer Antwort (ULA), die von der Entität (HSS, HLR) gesendet wird und für eine Ausrüstung (MME, SGSN, MSC) des besuchten Netzes als Antwort auf eine Aktualisierungsanforderung des Standorts bestimmt ist, wobei die Antwort erforderliche Mindest-Dienstqualitätsparameter des besuchten Netzes aufweist;
- ein Bestimmungsmodul, das bestimmen kann, ob die aktualisierten Dienstqualitätsparameter des besuchten Netzes mindestens gleich den erforderlichen Mindest-Dienstqualitätsparametern des besuchten Netzes sind; und
- ein Modul zum Senden einer positiven Antwort auf die Standort-Aktualisierungsanforderung an die Ausrüstung (MME, SGSN, MSC) des besuchten Netzes nur im Fall des Erfolgs der Bestimmung.

2. Verkehrssteuerungsplattform (SRP) nach Anspruch 1, **dadurch gekennzeichnet, dass** das Sendemodul konfiguriert ist, im Fall des Fehlschlagens der Bestimmung eine negative Antwort auf die Standort-Aktualisierungsanforderung an die Ausrüstung (MME, SGSN, MSC) des besuchten Netzes zu senden.

3. Verkehrssteuerungsplattform (SRP) nach Anspruch 2, **dadurch gekennzeichnet, dass** die negative Antwort ein Feld (AVP) mit einem besonderen Fehlertyp aufweist, der für ein Dienstqualitätsproblem repräsentativ ist.

4. Verfahren, das von einer Verkehrssteuerungsplattform (SRP) durchgeführt wird, die in Flussunterbrechung zwischen einer Entität (HSS, HLR) eines zellularen Mobilfunk-Heimatnetzes, die ein Speichermodul des geographischen Standorts von Benutzern des Netzes aufweist, und einer Ausrüstung (MME, SGSN, MSC) eines von einem Benutzer in einer Roaming-Situation besuchten Netzes platziert ist, wobei das Verfahren aufweist:
- einen Schritt (G10) des Erhalts von aktualisierten Dienstqualitätsparametern des besuchten Netzes;
- einen Schritt (G20) des Abfangens einer Antwort (ULA), die von der Entität (HSS, HLR) gesendet wird und für eine Ausrüstung (MME, SGSN, MSC) des besuchten Netzes als Antwort auf eine Aktualisierungsanforderung des Standorts eines Benutzers bestimmt ist, wobei die Antwort erforderliche Mindest-Dienstqualitätsparameter des besuchten Netzes aufweist;
- einen Schritt (G30), um zu bestimmen, ob die aktualisierten Dienstqualitätsparameter des besuchten Netzes mindestens gleich den erforderlichen Mindest-Dienstqualitätsparametern des besuchten Netzes sind; und
- einen Schritt (G40) des Sendens einer positiven Antwort auf die Standort-Aktualisierungsanforderung an die Ausrüstung (MME, SGSN, MSC) des besuchten Netzes nur im Fall des Erfolgs der Bestimmung.

5. System zur Steuerung des Verkehrs eines Benutzers in einer Roaming-Situation, das aufweist:
- eine Entität (HSS, HLR) eines zellularen Mobilfunk-Heimatnetzes, die ein Speichermodul des geographischen Standorts von Benutzern des Netzes aufweist, wobei die Entität konfiguriert ist, um:
- von einer Ausrüstung (MME, SGSN, MSC) eines von einem Benutzer in einer Roaming-Situation besuchten Netzes kommend eine Anforderung (UL) zur Aktualisierung des Standorts des Benutzers zu empfangen, wobei die Anforderung mindestens eine Kennung des Endgeräts des Benutzers, eine Kennung des besuchten Netzes und eine Kennung eines vom Benutzer angeforderten Diensts aufweist;
- an die Ausrüstung (MME, SGSN, MSC) eine Antwort auf die Anforderung zu senden, wobei die Antwort von einer Verkehrssteuerungsplattform (SRP) abgefangen werden kann, die in Flussunterbrechung zwischen der Entität (HSS, HLR) und der Ausrüstung (MME, SGSN, MSC) platziert ist,
wobei die Entität **dadurch gekennzeichnet ist, dass** sie konfiguriert ist, in die Antwort erforderliche Mindest-Dienstqualitätsparameter des besuchten Netzes einzufügen, die abhängig vom angeforderten Dienst und einem Profil des Benutzers im Heimatnetz bestimmt werden, und
- eine Verkehrssteuerungsplattform nach einem der Ansprüche 1 bis 3.

6. System nach Anspruch 5, wobei die Entität die Anforderung von einer Ausrüstung (MME) eines besuchten Netzes des Typs LTE gemäß dem Protokoll Diameter empfangen kann, wobei die erforderlichen Mindest-Dienstqualitätsparameter des besuchten Netzes dem dem Benutzer des Endgeräts UE im Heimatnetz für den angeforderten Dienst zugeteilten QCI entsprechen.

7. System nach Anspruch 5, wobei die Entität die Anforderung von einer Ausrüstung (SGSN, MSC) eines besuchten Netzes des Typs 3G gemäß dem Protokoll MAP empfangen kann.

8. Computerprogramm (P1, P2), das Anweisungen zur Ausführung der Schritte eines Verfahrens nach Anspruch 4 aufweist, wenn das Programm von einem Computer ausgeführt wird.

9. Computerlesbarer Aufzeichnungsträger (13, 23), auf dem ein Computerprogramm (P1, P2) aufgezeichnet ist, das Anweisungen für die Ausführung der Schritte eines Verfahrens nach Anspruch 4 enthält.

## Claims

1. Platform for steering traffic (SRP) for placement in stream between an entity (HSS, HLR) of a nominal mobile telephony cellular network including a module for recording the geographic location of users of said network and an equipment (MME, SGSN, MSC) of a network visited by one said user in a roaming situation, said platform comprising:
- a module for obtaining updated quality-of-service parameters of said visited network;
- a module for intercepting a response (ULA) transmitted by said entity (HSS, HLR) and destined for an equipment (MME, SGSN, MSC) of said visited network in response to a request to update the location of a user, said response including minimum quality-of-service parameters required for said visited network;
- a determining module capable of determining whether said updated quality-of-service parameters of said visited network are at least equivalent to said minimum quality-of-service parameters required for said visited network; and
- a module for sending, to said equipment (MME, SGSN, MSC) of said visited network, a positive response to said request to update the location only if said determining operation is successful.

2. Platform for steering traffic (SRP) according to Claim 1, **characterized in that** said sending module is configured to send, to said equipment (MME, SGSN, MSC) of said visited network, a negative response to said request to update the location if said determining operation is unsuccessful.

3. Platform for steering traffic (SRP) according to Claim 2, **characterized in that** said negative response includes a field (AVP) with a particular error type that is representative of a quality-of-service problem.

4. Method implemented by a platform for steering traffic (SRP) placed in stream between an entity (HSS, HLR) of a nominal mobile telephony cellular network including a module for recording the geographic location of users of said network and an equipment (MME, SGSN, MSC) of a network visited by one said user in a roaming situation, said method including:
- a step (G10) of obtaining updated quality-of-service parameters of said visited network;
- a step (G20) of intercepting a response (ULA) transmitted by said entity (HSS, HLR) and destined for an equipment (MME, SGSN, MSC) of said visited network in response to a request to update the location of a user, said response including minimum quality-of-service parameters required for said visited network;
- a step (G30) for determining whether said updated quality-of-service parameters of said visited network are at least equivalent to said minimum quality-of-service parameters required for said visited network; and
- a step (G40) of sending, to said equipment (MME, SGSN, MSC) of said visited network, a positive response to said request to update the location only if said determining operation is successful.

5. System for steering the traffic from a user in a roaming situation including:
- an entity (HSS, HLR) of a nominal mobile telephony cellular network including a module for recording the geographic location of users of said network, said entity being configured:
- to receive, from an equipment (MME, SGSN, MSC) of a network visited by one said user in a roaming situation, a request (UL) to update the location of the user, said request including at least one identifier of the terminal of the user, an identifier of said visited network and an identifier of a service requested by the user;
- to send, to said equipment (MME, SGSN, MSC), a response to said request, said response being liable to be intercepted by a platform for steering traffic (SRP) placed in stream between said entity (HSS, HLR) and said equipment (MME, SGSN, MSC),
said entity being **characterized in that** it is configured to insert, into said response, minimum quality-of-service parameters required for said visited network that are determined according to said requested service and to a profile of the user in said nominal network, and
- a platform for steering traffic according to any one of Claims 1 to 3.

6. System according to Claim 5, wherein said entity is capable of receiving said request from an equipment (MME) of a visited LTE network in accordance with the Diameter protocol, said minimum quality-of-service parameters required for said visited network corresponding to the QCI assigned to said user of the UE terminal on said nominal network for said requested service.

7. System according to Claim 5, wherein said entity is capable of receiving said request from an equipment (SGSN, MSC) of a visited 3G network in accordance with the MAP protocol.

8. Computer program (P1, P2) including instructions for executing the steps of a method according to Claim 4 when said program is executed by a computer.

9. Storage medium (13, 23) readable by a computer on which a computer program (P1, P2) comprising instructions for executing the steps of a method according to Claim 4 is stored.
